# EUROPÄISCHE PATENTANMELDUNG

(11) **EP 1 286 123 A1**
(43) Veröffentlichungstag der Anmeldung: **26.02.2003**
(21) Anmeldenummer: 02018039.4
(22) Anmeldetag: 13.08.2002
(51) Int. Cl.: F27B 3/10, F27B 3/08, F27B 3/18, F27D 13/00, F27D 1/18, C21C 5/52, F27D 1/14, F27D 23/00

(54) **Vorrichtung zum Einschmelzen von Metall und Verfahren zum Betreiben der Vorrichtung**

(30) Priorität: 22.08.2001 DE 10141133
(71) Anmelder: SMS Demag AG, 40237 Düsseldorf (DE)
(72) Erfinder: Figge, Dieter, 45147 Essen (DE); Dörken, Hans-Peter, 47802 Krefeld-Verberg (DE)
(74) Vertreter: Valentin, Ekkehard, Dipl.-Ing.

(57) **Zusammenfassung**

Um eine Vorrichtung zum Einschmelzen von Metall mit einem Elektrolichtbogenofen (1), der ein Ofengefäß mit einem Deckel (5) umfasst, sowie mit Verfahrmitteln (39) für das Ofengefäß, dahingehend weiterzuentwickeln, dass ein energiesparendes Arbeiten mit kurzen Nebenzeiten durch Wartungs- bzw. Reparaturarbeiten bei hoher Wirtschaftlichkeit erreicht werden kann, soll das Ofengefäß in Modulbauweise einen, mit einer Feuerfest-Auskleidung (2) versehenen, Unterofen (3) als ein erstes Modul sowie einen davon trennbaren Oberofen (4) als ein zweites Modul umfassen und das Modul Unterofen (4) aus einer Einschmelz-Arbeitsstellung (I), in der er mit dem Oberofen (4) und dem Deckel (5) zu einem Gesamtmodulaufbau verbunden ist, horizontal in eine Stellung (II) zur Reparatur, insbesondere des Feuerfest-Materials, die nicht mehr dem Bereich des Oberofens (4) zugeordnet ist, mittels der Verfahrmittel (39) verfahrbar sein.

## Beschreibung

Die Erfindung betrifft eine Vorrichtung zum Einschmelzen von Metall mit einem Elektroschmelzofen, insbesondere einem Elektrolichtbogenofen, der ein Ofengefäß mit einem Deckel umfasst, sowie mit Verfahrmitteln für das Ofengefäß.

Elektrolichtbogenöfen dienen insbesondere zum Einschmelzen von Schrott mittels elektrischer Energie, indem die Charge mit den Lichtbögen von Kohleelektroden, die durch den Deckel in das Ofengefäß ragen, aufgeschmolzen wird. Das Ofengefäß ist mit einer feuerfesten Ausmauerung und ggf. mit gekühlten Wandelementen geschützt. Aufgrund der hohen Schmelzleistungen ist diese Feuerfest-Ausmauerung hohen Verschleißerscheinungen ausgesetzt, was eine Reparatur bzw. Emeuerung der Feuerfest-Ausmauerung etwa einmal wöchentlich notwendig macht. Hierbei erweist sich als nachteilig, dass zur Reparatur des Ofengefäßes andere Bauteile demontiert werden müssen, was zeitaufwendig ist.

Aus der DE 39 40 558 A1 ist ein Lichtbogenofen bekannt mit einem Ofengefäß und einem Deckel, die gegeneinander bewegbar sind, sowie wenigstens einem, mit heißem Ofengas beaufschlagbaren schachtförmigen Chargiergutvorwärmer, der in seinem oberen Bereich eine Eintrittsöffnung für Chargiergut und einen Gasauslass für das im Wärmeaustausch mit dem Chargiergut abgekühlte Ofengas und eine der Eintrittsöffnung gegenüberliegende Austrittsöffnung aufweist, der ein Boden-und/oder Wandbereich des Ofengefäßes zum Abstützen einer Chargiergutsäule zugeordnet werden kann. Hierbei soll der Chargiergutvorwärmer einem ersten und mindestens einem weiteren Bereich des Ofengefäßes zugeordnet werden, um neben der eigentlichen Chargiergutsäule am Rand des Ofengefäßes in einer anderen Stellung weitere Chargiergutteile näher an die Elektroden zu bringen. Für eine Bewegung wird der Deckel zusammen mit dem Chargiergutvorwärmer angehoben und das Ofengefäß auf Schienen mit unterschiedlichem Richtungssinn verschoben. Der Chargiergutvorwärmer weist mit Abstand von der Austrittsöffnung ein Sperrglied in Form einer Walze mit kragarmförmigen Trägem auf, das in einer Schließstellung eine Auflage für eine Chargiergutteilmenge bildet.

Der Erfindung liegt die Aufgabe zugrunde, eine Vorrichtung zum Einschmelzen von Metall mit einem Elektrolichtbogenofen sowie ein Verfahren bereitzustellen, mit denen ein energiesparendes Arbeiten mit kurzen Nebenzeiten durch Wartungs- bzw. Reparaturarbeiten bei hoher Wirtschaftlichkeit erreicht werden kann.

Diese Aufgabe wird durch eine Vorrichtung mit den Merkmalen des Anspruchs 1 sowie ein Verfahren mit den Merkmalen des Anspruchs 16 gelöst. Vorteilhafte Weiterentwicklungen sind in den Unteransprüchen beschrieben.

Erfindungsgemäß wird vorgeschlagen, dass das Ofengefäß in Modulbauweise einen, mit einer Feuerfest-Auskleidung versehenen, Unterofen, d.h. den unteren Ofenteil, in dem sich die Schmelze befindet, als ein erstes Modul sowie einen davon trennbaren Oberofen, d.h. den oberen Ofenteil in Form der Ofenwandung, als ein zweites Modul sowie einen vorzugsweise von dem Oberofen trennbaren Dekkel als ein drittes Modul umfasst, und dass das Modul Unterofen aus einer Einschmelz-Arbeitsstellung, in der es mit dem Oberofen und dem Deckel zu einem Gesamtmodulaufbau verbunden ist, horizontal in eine Stellung zur Reparatur, insbesondere des Feuerfest-Materials, die nicht mehr dem Bereich des Oberofens zugeordnet ist, mittels der Verfahrmittel unter Auflösung des Gesamtmodulaufbaus gegenüber dem horizontal ortsfesten Oberofen mit Deckel verfahrbar ist.

Verfahrensgemäß wird dieser Grundgedanke einer Schnellwechselvorrichtung für die Wartung des Feuerfest-Materials eines Elektrolichtbogenofens dadurch weitergebildet, dass die aufgrund des verfahrenen Unterofens entstandene Lücke im Gesamtmodulaufbau sofort durch ein viertes Modul in Form eines hinsichtlich der Feuerfest-Ausmauerung wieder einsatzfähigen und vorzugsweise aufgeheizten Unterofens geschlossen wird, um Temperaturverluste bei einem aufgelösten Gesamtmodulaufbau so weit wie möglich zu vermeiden.

Ein gewartetes drittes Unterofen-Modul oder ein nach der bevorzugten Ausführungsform viertes Unterofen-Modul wird unmittelbar neben der Arbeitsstellung über Gasbrenner vorgeheizt. Wegen der vorgeheizten Ausmauerung ist der Unterofen sofort nach Einbau in den Gesamtmodulaufbau für einen Einschmelzvorgang einsatzbereit.

Aufgrund der vorgeschlagenen Schnellwechselvorrichtung durch das verfahrbare Unterofen-Modul wird erreicht, die für die Wartung bzw. Ausbesserung der Feuerfest-Ausmauerung benötigte Zeit im Verhältnis zum Einschmelzablauf sehr gering zu halten. Es wird eine kürzest mögliche Produktionsunterbrechung für die Reparatur des Feuerfest-Materials im Ofengefäß erreicht. Weil der Unterofen vollständig aus dem Bereich des Ofengefäßes herausgefahren wird, entfällt die Demontage von anderen Ofenteilen bei der Ausbesserung des Feuerfest-Materials.

Da nur der Teil des Ofens aus dem Gesamtmodulaufbau herausgefahren wird, der aufgrund des Feuerfest-Materials repariert werden muss, bleibt die Ofenhitze im Oberofen und im Deckel erhalten, wobei vorzugsweise die Lücke durch ein viertes Modul geschlossen wird. Damit ergibt sich ein relativ geringer Energieverlust beim Wechsel des zu wartenden Unterofens.

Da die beiden oberen Module, d.h. der Oberofen und der Deckel, horizontal ortsfest angeordnet sind, sind die mit dem Deckel verbundenen Schrottsammelräume oberhalb des Deckels ebenfalls stationär, so dass die Schrottzufuhr - unter Wegfall eines Krans mit Bedienungspersonal - automatisierbar ist.

Zusätzlich schafft die vorgeschlagene Modulbauweise des Elektrolichtbogenofens eine sehr variable Bauart, wobei auf Kundenwünsche flexibel eingegangen werden kann.

Die dreiteilige, radiale Ringsegmentdichtung zur Abdichtung eines Spaltes zwischen einem vertikal bewegbaren Oberofen und dem Deckel ist vorzugsweise als Stahl-Keramik-Verbundkonstruktion ausgebildet. Die Dichtung gewährleistet, dass ein thermisches Ausdehnen des Oberofens in vertikaler Richtung kompensiert werden kann.

Im Gegensatz zum bisher Bekannten ist das Schrott-Verschlusselement - und zwar der Schrottsammelräume im Deckel - nicht mehr als Fingerschwinge oder als Walze ausgebildet, sondern als linear verfahrbares Verschlussteil, was aus dem Ofengefäß zur Öffnung herausfahrbar ist. Hierbei handelt es sich insbesondere um eine Schrägführung gegen Klemmen.

Weitere Einzelheiten und Vorteile der Erfindung ergeben sich aus den Unteransprüchen und aus der nachfolgenden Beschreibung, in der die in den Figuren dargestellten Ausführungsformen der Erfindung näher erläutert werden. Dabei sind neben den oben aufgeführten Kombinationen von Merkmalen auch Merkmale alleine oder in anderen Kombinationen erfindungswesentlich. Es zeigen:
- Fig. 1: einen Vertikalschnitt durch einen Elektrolichtbogenofen nach der Modulbauweise mit einem Deckel nach einer ersten Ausführungsform;
- Fig. 2: eine Draufsicht auf die erfindungsgemäße Vorrichtung mit einem Elektrolichtbogenofen und Verfahrmitteln für Unterofen-Module;
- Fig. 3a,b: eine Draufsicht sowie eine Seitenansicht einer Verbundkette von zwei Wagen, die jeweils ein Unterofen-Modul aufnehmen mit Antriebsmitteln;
- Fig. 4: eine Seitenansicht auf die Ofenbühne mit einem Wagen mit Unterofen-Modul und dazu angeordnetem Pfannenwagen;
- Fig. 5a: einen Vertikalschnitt durch den Elektrolichtbogenofen nach der Modulbauweise mit einem vertikal verfahrbaren Oberofen-Modul und einem unteren Deckelteil nach einer zweiten Ausführungsform;
- Fig. 5b: den Vertikalschnitt durch den Elektrolichtbogenofen nach Fig. 5a mit einem unteren und oberen Deckelteil, das als Schrottvorwärmer ausgebildet ist;
- Fig. 6: eine Detailansicht auf die Verbindung zwischen einem vertikal verfahrbaren Oberofen-Modul mit Unterofen-Modul;
- Fig. 7: Ausführungsformen der Dichtelemente zur Abdichtung des zwischen dem Oberofen-Moduls und dem Deckel-Modul durch ein Herunterfahren des Oberofen-Moduls entstehenden Spaltes in der Arbeitsstellung;
- Fig. 8a,b: Detailansichten der in Fig. 7 gezeigten Dichtelemente;
- Fig. 9: die Draufsicht auf eine Ausführung der Dichtelemente als drei radial bewegte Dichtsegment-Ringteile mit Halte- und Verfahrkonstruktion;
- Fig. 10: die Draufsicht auf eine bevorzugte Weiterbildung der Haltekonstruktion eines radial bewegten Dichtsegment-Ringteils;
- Fig. 11: einen Vertikalschnitt einer Weiterbildung nach Fig. 10;
- Fig. 12: eine weitere Ausführungsform eines Dichtelementes zur Gas- Abdichtung des zwischen dem Oberofen-Moduls und dem Deckel entstehenden Spaltes durch eine Öldichtungstasse;
- Fig. 13: einen Querschnitt durch die Öldichtungstasse mit Kühlung nach Fig. 12;
- Fig. 14: eine Ausführungsform der Oberflächenbeschichtung der Innenseite des Deckels mit Keramikplatten oder -kacheln;
- Fig. 15: einen Vertikalschnitt durch einen kippbaren Unterofen als Modul eines Elektrolichtbogenofens in der Arbeitsstellung;
- Fig. 16: einen Vertikalschnitt durch den kippbaren Unterofen nach Fig. 15 in der Abstichstellung;
- Fig. 17: die Draufsicht auf den Elektrolichtbogenofen nach der Fig. 1;
- Fig. 18: die Draufsicht auf den Elektrolichtbogenofen mit Stützstruktur für den Deckel sowie Deckelhalterung;
- Fig. 19: die Draufsicht als Detailansicht einer ersten Ausführungsform der Führung für die Gas-Verschlusselemente am oberen Teil des Dekkels;
- Fig. 20: einen Querschnitt der Ausführungsform der Führung der Fig. 19;
- Fig. 21: einen Querschnitt als Detailansicht einer zweiten Ausführungsform der Führung für die Gas-Verschlusselemente am oberen Teil des Deckels.

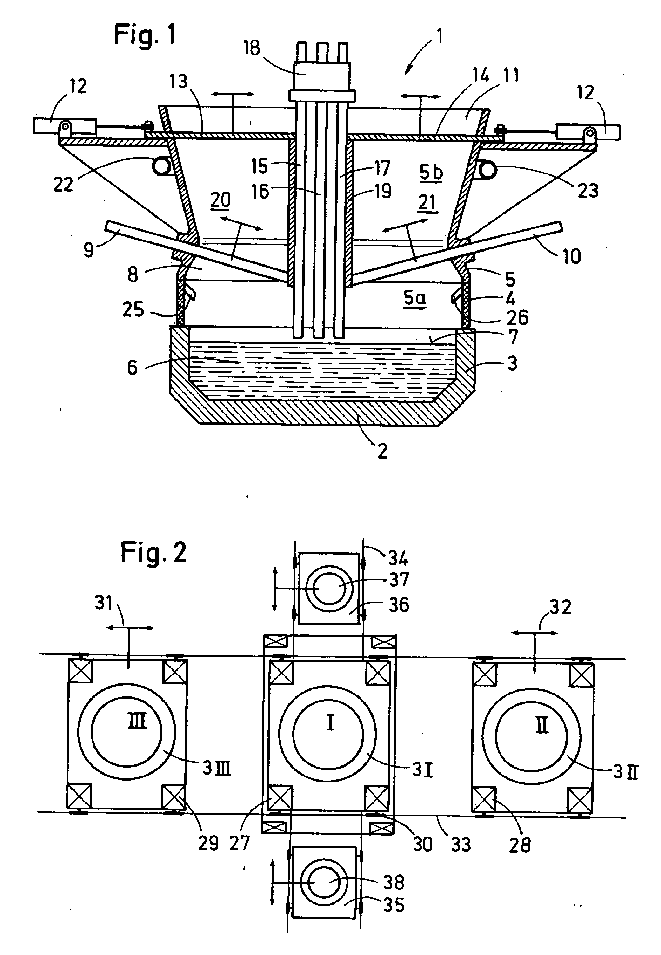

Fig. 1 zeigt einen Vertikalschnitt eines Elektrolichtbogenofens 1 nach der Modulbauweise mit einem, mit einer Feuerfest-Auskleidung 2 versehenen, Unterofen 3 als ein erstes Modul sowie einem davon trennbaren Oberofen 4 als ein zweites Modul sowie einem hiervon trennbaren dritten Modul in Form des Deckels 5. Der Unterofen 3 umfasst den Bereich des Ofens, in dem sich beim Aufschmelzprozess die Schmelze 6 mit Schlacke befindet (hier mit der Badoberfläche 7 angedeutet). An die Ofenwandung als Oberofen 4 schließt sich der Deckel 5 an, der in seinem unteren Bereich 8 erste und zweite schräg verfahrbare Schrott-Verschlusselemente 9, 10 sowie in seinem oberen Bereich 11 horizontal, mittels hydraulischer Zylinder-Einheiten 12, verfahrbare Gas-Verschlusselemente 13, 14 aufweist. Mittig ragen drei Elektroden 15-17 in den Elektrolichtbogenofen 1 hinein, die von einem Elektrodentragarm 18 gehalten und geführt werden, und die mittels eines Metallrohrs 19, das sich in das Ofeninnere erstreckt, umgeben und geschützt sind. Aufgrund der mittig angeordneten Elektroden 15-17 wird der Deckelbereich in einen ersten, linken, und einen zweiten, rechten, Schrottsammelraum 20, 21 getrennt. Dem linken Schrottsammelraum 20 sind an seiner unteren Öffnung ein linkes Schrottverschlusselement 9 und an seiner oberen Öffnung ein linkes Gasverschlusselement 13, dem rechten Schrottsammelraum 21 entsprechend ein rechtes Schrottverschlusselement 10 und ein rechtes Gasverschlusselement 14 zugeordnet. Der sich hinsichtlich seiner Querschnittsfläche nach oben hin vergrößernde Deckel 5 weist jeweils in den Schrottsammelräumen 20, 21 ein Abgassammelrohr 22, 23 als Abgasleitung für die heißen Gase aus dem Ofengefäß auf, die durch Wärmetausch den Schrott oberhalb der Schrott-Verschlusselemente 9, 10 in entgegengesetzter Strömungsrichtung zur Fallrichtung des Schrotts vorwärmen. Hierzu sind die Schrott-Verschlusselemente 9, 10 gasduchlässig ausgebildet.

Vorzugsweise sind am Oberofen 4 unterhalb des Deckels 5 Sauerstoff-Gas-Brenner 25, 26 angeordnet, die eine schnelle Erhöhung der Abgastemperatur unterstützen und somit unerwünschte Gas-Bestandteile verhindern und die eine effiziente Schrottvorwärmung bewirken.

Die Einbindung des Modul-Elektrolichtbogenofens 1 am Beispiel eines nicht kippbaren Ofengefäßes in das System von Arbeitsstellung (I), Reparatur (II) - und Heizstellung (III) zeigt Fig. 2 in der Draufsicht. Der jeweilige Unterofen (3I; 3II; 3III) wird von jeweils einem Wagen 27, 28, 29 aufgenommen, der mittels Rollen 30 in Pfeilrichtung 31, 32 verfahren werden kann. Bei dem hier gezeigten Ausführungsbeispiel ist ein Unterofen 311 mit verschlissenem Feuerfest-Material nach rechts verfahren. In dieser von der Arbeitsstellung I entfernten Stellung II kann der Unterofen 3II repariert werden. Alternativ ist es auch möglich, dass der Unterofen 3II aus dem Wagen 28 mittels eines Krans (nicht gezeigt) herausgehoben und in eine entsprechende Werkstatt gebracht wird. Auf der linken Seite ist ein Unterofen 3III in der Heizstellung III dargestellt. Der aufgewärmte Unterofen 3III wird in die freiwerdende Lücke in den Gesamtmodulaufbau des Elektrolichtbogenofens als Schnellwechseleinrichtung nach rechts verschoben. Es ist möglich, dass ein reparierter Unterofen mittels eines Krans in den Wagen 29 in Heizstellung III eingesetzt wird oder dass ein Unterofen jeweils einem Wagen zugeordnet ist, der mit ihm die einzelnen Stellungen abfährt. Quer zur Rollenbahn 33 für die Unterofen-Wagen 27-29 verläuft ebenfalls eine Bahn 34, die Wagen 35, 36 mit Pfannen 37, 38 oder Schlackebehältern unter den Elektrolichtbogenofen bzw. unterhalb den Unterofen 31 zum Abstich befördern. Die Wagen 27-29 sind so ausgeführt, dass die Unteröfen 27-29 in einem solchen Abstand A vom Hallenboden positioniert sind, dass die Pfannenwagen 35, 36 ausreichend Platz unterhalb des Unterofens haben.

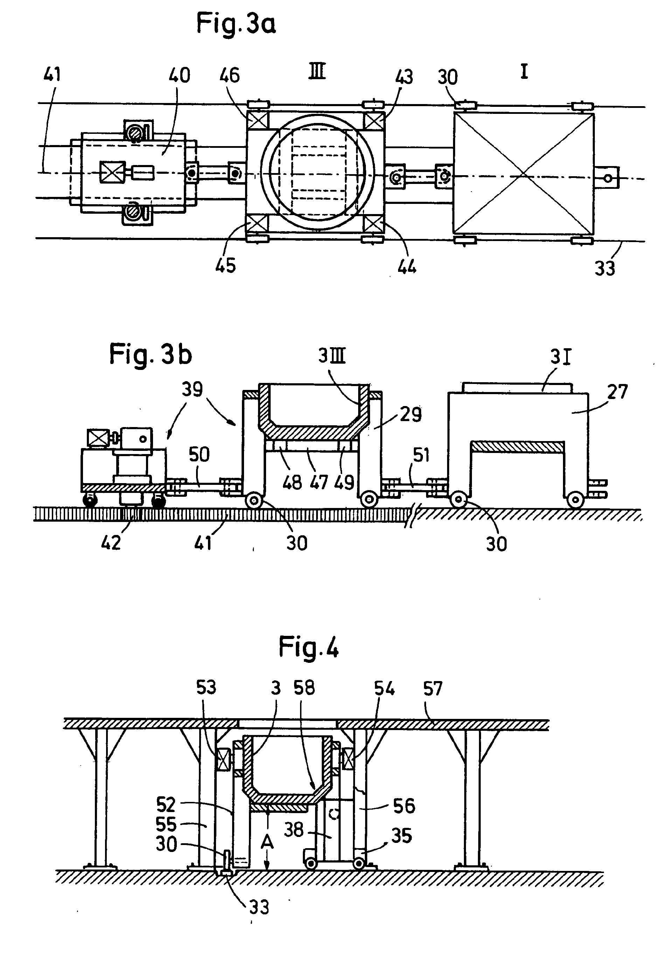

Für die Ausführungsform des wechselweise Positionierens eines Unterofens in Arbeitsstellung I, während jeweils der andere Unterofen in Reparaturstellung II oder in der Aufheizstellung III ist, sind die Wagen 27-29 miteinander verbunden, was aus Fig. 3 ersichtlich wird. Die Verfahrmittel 39 für die jeweiligen Unteröfen 3I, 3III umfassen Wagen 27, 29 sowie ein Antriebsmittel 40 in Form eines Traktors. Zur horizontalen Bewegung der Wagen 27, 29 sind diese mit Rollen 30 versehen, die entlang von Rollenbahnen 33 bzw. Führungsbahnen laufen. Mittig zur Führungsbahn ist eine Zahnstange 41 angeordnet, in die ein Ritzel 42 des Traktors 40 eingreift, das mittels eines Motors angetrieben wird.

Die hier dargestellten Wagen 27, 29 umfassen ein Grundgerüst mit Stelzen 43 bis 46 und einem mittigen abgesenkten Boden 47, auf den der Unterofen 3 aufgesetzt wird. In den mittigen Boden 47 sind Öffnungen 48, 49 für den Abstich eingebracht.

Der rechts dargestellte Wagen 27 zeigt die Seitenansicht mit dem etwas über die Höhenabmessungen des Wagens hinausragenden Unterofen 3. Die einzelnen Wagen 27, 29 sind untereinander bzw. mit dem Traktor 40 über Verbindungsstangen 50, 51 verbunden, die hier mittels Bolzen an den Wagen befestigt sind.

Fig. 4 zeigt eine bevorzugte Weiterentwicklung der Verfahrmittel 39 für den Unterofen 3, indem der Wagen 27, 28 bzw. 29 an seiner Außenseite 52 Zentrier- oder Klemmeinrichtungen 53, 54 aufweist, die im Zusammenhang mit sich vertikal erstreckenden Pfeilern 55, 56 der Ofenbühne 57, die jeweils in einem vorgegebenen Abstand zur Rollenbahn 33 angeordnet sind, eine zentrierte Verfahrbewegung des Wagens bewirken. Die Zentrier- und Klemmeinrichtungen 53, 54 können auch an den Pfeilern 55, 56 der Ofenbühne fest angeordnet sein. Bei der hier gezeigten Ausführungsform erfolgt der Abstich in einem seitlichen Teil 58 des Unterofens 3, wobei der Pfannenwagen 35 mit der Pfanne 38 auf einer im zugeordneten Führungsbahn 34 an den Unterofen 3 für den Abstich herangefahren wird.

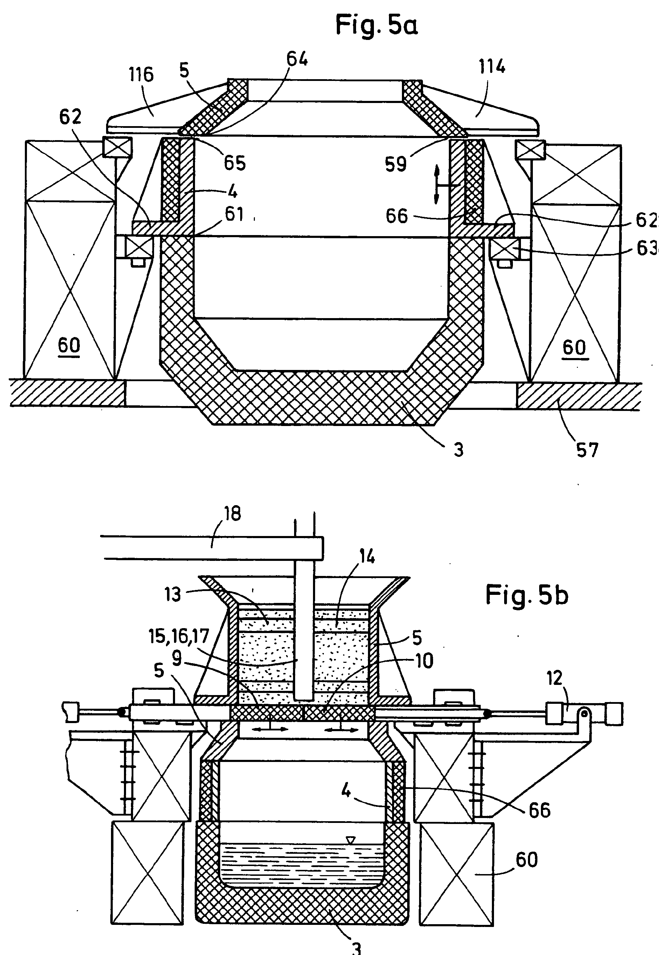

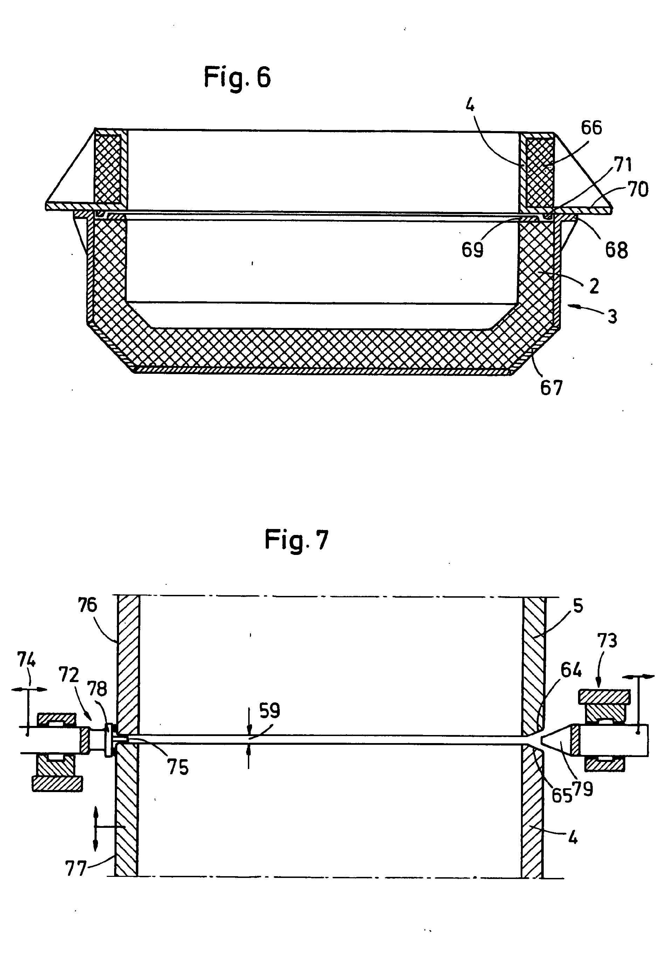

Fig. 5a zeigt den modulartigen Aufbau des Elektrolichtbogenofens 1 mit dem Unterofen 3 als ersten Modul, dem Oberofen 4 als zweiten Modul und dem hiervon mit einem Spalt 59 beabstandet angeordneten Deckel 5 als dritten Modul. Oberofen 4 und Deckel 5 sind auf der Ofenbühne 57 mittels einer Stützstruktur 60 abgestützt. Das Modul Oberofen 4 liegt mit seiner Unterseite 61 und zwar mit einem nach außen vorspringenden Kragen 62 auf einem Hubelement 63 auf, das vertikal entlang der Stützstruktur 60 verfahrbar ist. In der Arbeitsstellung (I) befindet sich zwischen der Unterkante 64 des lagefest angeordneten Deckels 5 und der Oberkante 65 des Oberofens 4 ein Spalt 59, der mit einem Dichtelement (vgl. Fig. 7) während der Arbeitsstellung (I) verschlossen ist. In der Arbeitsstellung (I) ist aufgrund des nach unten verfahrenen Oberofens 4 ein dichte Verbindung zwischen dem Unter- und Oberofen 3, 4 erreicht. Wenn der Gesamtmodulaufbau zur Reparatur des Unterofens 3 aufgelöst werden soll, wird das Dichtelement aus dem Spalt 59 entfernt und der Oberofen 4 mittels des Hubelementes 63 in der Stützstruktur 60 nach oben in Richtung Deckel 5 gefahren. Der Verbund zwischen Unter- und Oberofen 3, 4 wird aufgelöst, und der Unterofen 3 kann mittels der verfahrbaren Wagen 27-29 aus dem Gesamtmodulaufbau Elektrolichtbogenofen 1 herausgefahren werden.

Der Oberofen 4 als zweites Modul ist horizontal ortsfest auf der Stützstruktur 60 gelagert. Der Oberofen 4 ist zur Vermeidung von Wärmeverlusten an seinen Außenseiten mit Isolierungen 66 versehen. Der Oberofen 4 und der Deckel 5 sind vorzugsweise aus einem hochwarmfesten chrom- und tantalhaltigen Stahl gefertigt, wie zum Beispiel aus Nicrotan 6325 mit 25% Chrom und 8% Tantal. Wegen der warmfesten Eigenschaften können diese Module mit Temperaturen bis 900°C betrieben werden. Der Kühlungsgrad kann zu herkömmlichen Kühlungen des Ofendeckels wesentlich eingeschränkt sein oder die Betriebstemperatur kann erhöht werden.

Mit Hilfe der Fig. 5b wird die Ausbildung des Deckels 5 als Schrottvorwärmer dargestellt, wobei bei dieser Ausführungsform im Gegensatz zur Fig. 1 die Schrott-Verschlusselemente 9, 10 nicht schräg, sondern horizontal zwischen einer Schließstellung und einer geöffneten Stellung verfahren werden.

Eine bevorzugte Ausführungsform einer trennbaren Verbindung zwischen Unterofen 3 als ersten Modul und Oberofen 4 als zweiten Modul zeigt Fig. 6. Der Unterofen 3 umfasst ein Metallgefäß 67 mit einem an seiner Oberkante nach außen vorspringenden Kragen 68, das mit Feuerfest-Material 2 ausgemauert ist. Oberhalb der Feuerfest-Ausmauerung 2 ist auf Höhe des Kragens 68 ein Vorsprung 69 angeordnet. Die Unterseite des Oberofens 4 ist ebenfalls mit einem nach außen vorspringenden Kragen 70 versehen. Beim Herunterfahren des Oberofens 4 kommt dessen Kragen 70 auf dem Kragen 68 des Unterofens 3 zur Anlage. Hierbei kommt der Vorsprung 69 des Unterofens 3 mit einem komplementär ausgeformten Vorsprung 71, der an der Unterseite des Kragens 70 des Oberofens 4 angeordnet ist, für eine Grobzentrierung in Eingriff. Es wird deutlich, dass der Verbund Unter- mit Oberofen 3, 4 nur durch eine vertikale Bewegung des Oberofens 4 nach oben aufzulösen ist.

Die nachfolgenden Fig. 7 bis 13 zeigen verschiedene bevorzugte Ausführungsformen der Dichtelemente 72, 73 zur Abdichtung des zwischen dem Oberofen 4 und dem Deckel 5 durch ein Herunterfahren des Oberofens 4 entstehenden Spaltes 59 während der Arbeitsstellung (I).

Fig. 7 zeigt auf der linken Seite ein radial entlang der Pfeilrichtung 74 bewegliches Dichtelement 72, das mit einem plattenförmigen, flachen Vorsprung 75 in den Spalt 59 zwischen Deckel 5 und Oberofen 4 eingefahren wird und über eine an den Außenseiten 76, 77 von Deckel und Oberofen zur Anlage kommende Platte 78 die Abdichtung erreicht. Für dieses Dichtelement 72 müssen die Unterkante 64 bzw. die Oberkante 65 von Deckel 5 und Oberofen 4 nicht angeschrägt sein, während dies bei der zweiten Ausführungsform für ein Dichtelement 73 der Fall ist, das mit einer konisch zulaufenden Abdichtnase 79 arbeitet, die zwischen die schrägen Kanten 64, 65 eingeführt wird.

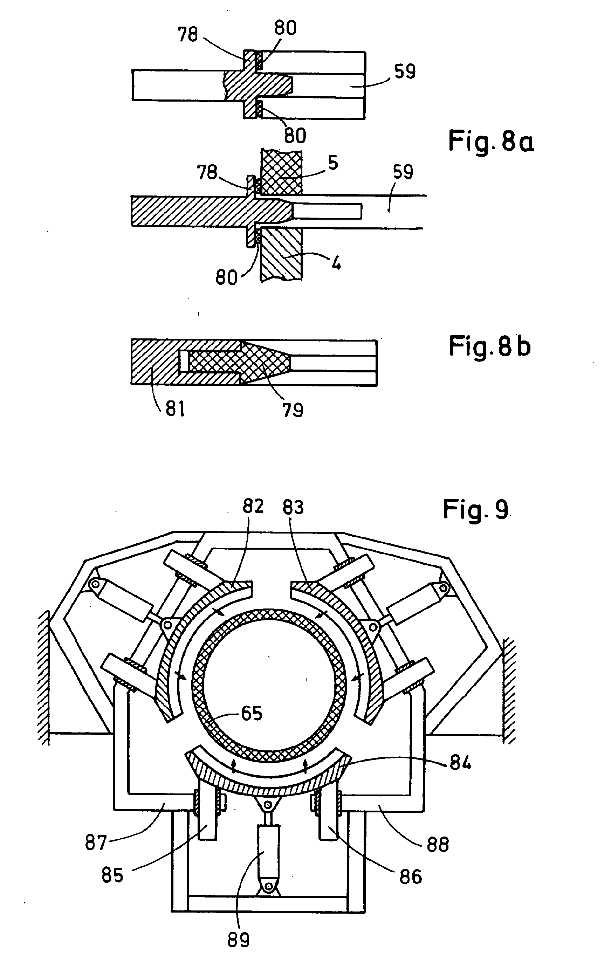

Detailansichten zu dem Dichtelement 72 nach Figur 7 sind in den Fig. 8a und 8b gezeigt. Das Plattendichtelement nach Fig. 8a ist als Keramik-Stahl-Verbundkonstruktion ausgebildet, wobei als Kontakt- und Dichtelemente zwischen der Platte 78 und der Außenseite von Deckel 5 und Oberofen 4 elastische Keramikfliesen 80 zum Einsatz kommen. Bei dem Dichtelement 73 mit konusförmiger Abdichtung nach Fig. 8b wird ein Stahlrahmen 81 aus hochwarmfestem Stahl auf eine spitz zulaufende Nase 79 aufgeschrumpft. Die Abdichtungsnase 79 besteht aus einer Keramik, vorzugsweise aus SiC oder ZrO₂.

Beide Alternativen von Dichtelementen 72, 73 sind als radial bewegte Ringe 82, 83, 84 ausgebildet, und hier insbesondere in Dreifachteilung, was in Fig. 9 gezeigt wird. Die Dichtelemente oder Dichtsegment-Ringteile 82-84, die jeweils einen Winkel von 120° überstreichen, werden ebenfalls von der Stützstruktur 60 auf der Ofenbühne 57 abgestützt. Jeder Dichtsegment-Ringteil 82, 83, 84 ist auf seiner von dem Ofen wegweisenden Seite mit zwei Trägern 85, 86 versehen, die in Führungsarmen 87, 88 in Höhe des Spaltes 57 in Richtung Spalt und zurück mittels hydraulischer Zylinder-Einheiten 89 verfahrbar sind.

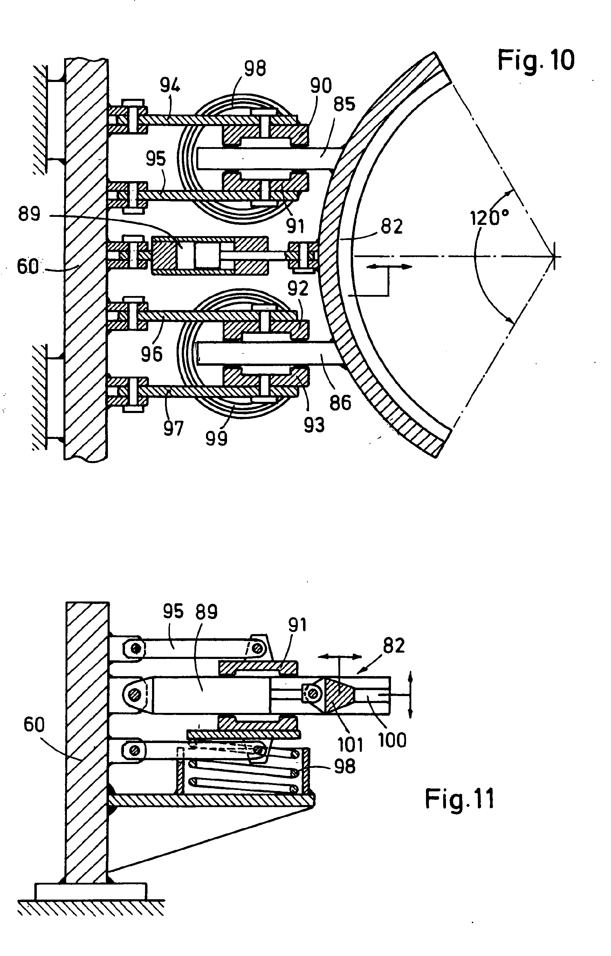

Eine besonders bevorzugte Weiterentwicklung der Verfahrmittel für ein solches Dichtsegment-Ringteil 84 zeigen die Fig. 10 und 11, die einen Höhenausgleich des Dichtelementes 84 zur Kompensation der Wärmedehnung des Oberofens 4 gewährleisten. Die Fig. 10 und 11 zeigen die Draufsicht bzw. den Vertikalschnitt auf ein Dichtsegment-Ringteil 82 bzw. eines Dichtsegment-Ringteiles, das mittels der Kolben-Zylinder-Einheit 89, die an der Stützstruktur 60 angeordnet ist, hin- und herbewegbar ist. Die sich nach hinten in Richtung Stützstruktur 60 erstreckenden Träger 85, 86 werden von Führungsschienen 90-93 aufgenommen. Die Führungsschienen sind an Parallel-Lenkern 94 -97 befestigt, die wiederum auf einer Schraubenfeder 98, 99 zum Gewichtsausgleich für das Ringteil 82 und die Führung lagern.

Bei der in Fig. 11 gezeigten Ausführungsform ist das Dichtungselement mit einem Vorsprung 100 sowie einem Steilkegel 101, der ein Klemmen zwischen Deckel 5 und Oberofen 4 verhindem soll, ausgebildet. Aufgrund der Lagerung auf Schraubenfedem 98, 99 und der Befestigung mittels Parallel-Lenkem 94-97 ist die Längsbewegung der Dichtsegment-Ringteile 82 bei gleichzeitigem Höhenausgleich möglich, und es können Änderungen in den Abmessungen des Oberofens 4 bzw. des Spaltes 59 aufgrund von Wärmedehnungen im Material kompensiert werden.

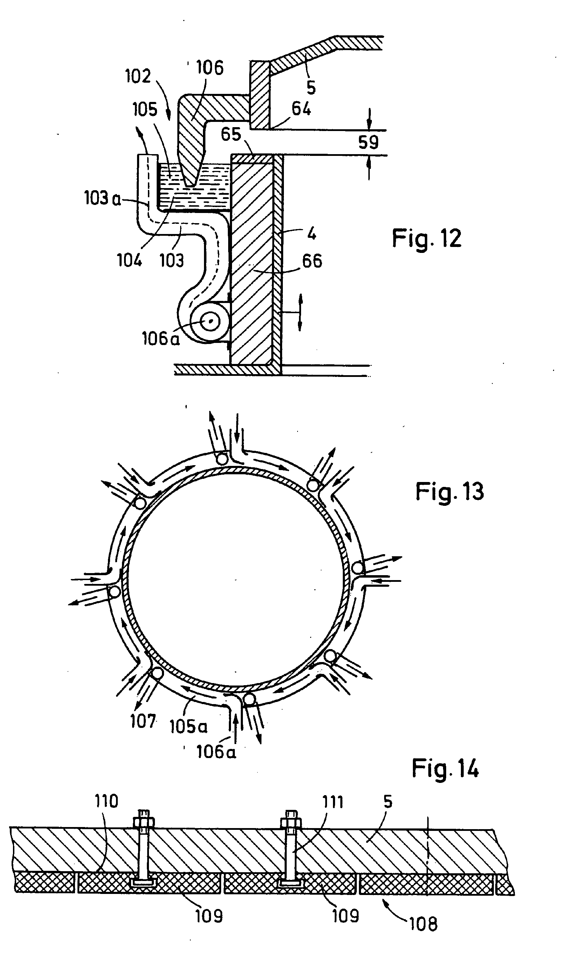

Fig. 12 zeigt den Vertikalschnitt durch eine weitere Ausführungsform einer GasAbdichtung 102 des zwischen dem Oberofen 4 und dem Deckel 5 verbleibenden Spaltes 59 in der Arbeitsstellung (I) mit Hilfe einer Dichtungstasse. Hierzu ist an der mit einer Isolierung 66 versehenen Außenseite des Oberofens 4 auf Höhe der Oberkante 65 eine mit einem Kühlmedium durchflossene Dichtungstasse 103 befestigt, die sich zur Oberkante 65 des Oberofens 4 hin so öffnet, dass ein Aufnahmebereich 104 für ein Ölbad 105 entsteht, in das ein Abdichtungsfinger 106, der am unteren Bereich des Deckels 5 befestigt ist, eintaucht und somit eine Abdichtung zur Außenatmosphäre schafft. Die Dichtungstasse 103 ist mit Kühlkanalsegmenten 105 durchzogen, die mit Kühlwasser oder Kühlluft durchflossen sind. An einem unteren Bereich der Dichtungstasse 103 sind Einspeisungsrohre 106a für die Kühlmedien vorgesehen, wobei, zum Umfang des Oberofens gesehen, mehrere, vorzugsweise acht, Zuflüsse bzw. Einspeisungsrohre 106 zur Einspeisung von frischem Kühlmedium, bzw. acht Abflüsse 107 vorhanden sein können, was durch den Querschnitt nach Fig. 13 weiter verdeutlicht wird. Längs des Umfanges des Oberofens sind die jeweiligen Zu- und Abläufe 106a, 107 für das Kühlmittel angeordnet.

Nach einer bevorzugten Ausführungsform weisen der Deckel 5 des Elektrolichtbogenofens 1 und/oder die Verschlusselemente 13, 14 eine Keramikbeschichtung und/oder eine Wasserkühlung auf, wobei ein Beispiel einer solchen Keramikbeschichtung 108 mit Fig. 14 gezeigt wird. Die Keramikbeschichtung 108 besteht aus einzelnen Keramikplatten 109 oder -kacheln, insbesondere aus SiC, die jeweils an der heißen Innenseite 110 des Deckels 5 oder der Verschlusselemente mittels Halteelementen 111 bzw. Halteklammern , die aus SiC-Keramik, insbesondere faserverstärkter SiC-Keramik, bestehen, befestigt sind. Die aus den Platten 109 vorspringenden Halteklammern werden durch den Metalldeckel 5 geführt und unter Zug an der Innenseite des Metalldeckels gehalten. Die Gas-Verschlusselemente bestehen vorzugsweise aus einer Metall-Keramik-Konstruktion, wobei die Keramikplatten bzw. -kacheln an dem Stahlrahmen befestigt werden.

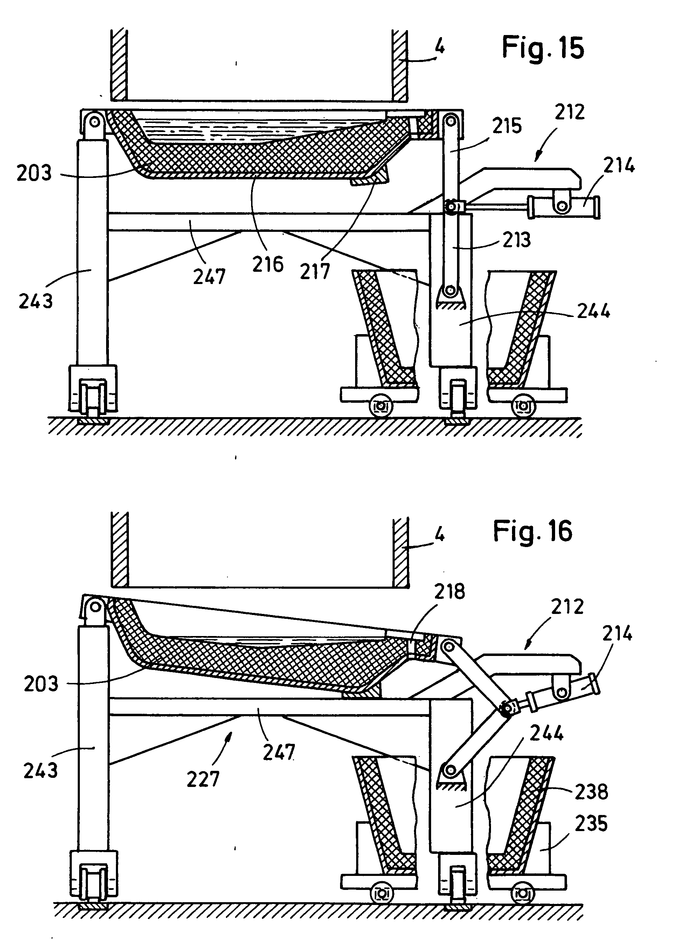

Neben den in den Fig. 3 und 4 gezeigten nicht kippbaren Unterofen kann der Elektrolichtbogenofen nach der Erfindung auch mit einem kippbaren Unterofen 203 als Modul versehen werden. Einen solchen kippbaren Unterofen 203 zeigen die Fig. 15 und 16.

Der Unterofen 203 ist hierzu auf einem Wagen 227, der sich aus vertikal erstrekkenden Stelzen 243, 244 und einem mittigen horizontalen Querbalken 247 oder einer Traverse zusammensetzt, angeordnet und zwar auf einer Seite schwenkbar auf einer Vertikal-Stelze 243. Auf der gegenüberliegenden Seite ist der Unterofen 203 mittels eines Kniehebelmechanismusses 212, wobei der untere Hebel 213 an ebenfalls einer Stelze 244 des Wagens 227 gelagert ist, aus einer horizontalen Lage in Arbeitsstellung in eine schräge Lage zum Abstich kippbar. Die Kipp- bzw. die Abstichstellung sind in Fig. 16 dargestellt. Durch Verfahren der Kolben-Zylinder-Einheit 214 werden die Hebel 213, 215 in eine schräge Position überführt und der Unterofen 203 verkippt. Am Boden 216 des Unterofens 203 ist ein Pufferelement 217 vorgesehen, das am Ende der Kippbewegung zur Auflage auf den Querbalken 247 kommt. Der Querbalken 247 dient als Sicherung sowie als Kippbegrenzung für den Unterofen 203. Auf der nach unten gekippten Seite des Unterofens 203 befindet sich ein Abstichloch 218, durch das Schmelze bzw. Schlakke in einen unterhalb des Abstichloches 218 positionierten Pfannenwagen 235 mit Pfanne 238 abfließen kann.

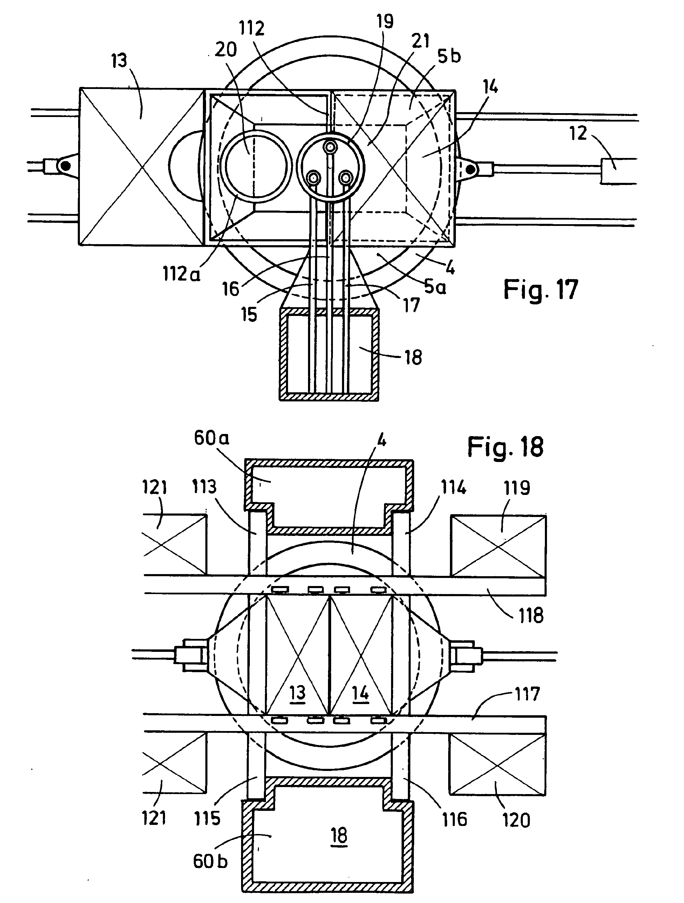

Der modulartig aufgebaute Elektrolichtbogenofen soll gleichzeitig ein Vorwärmen des Chargierguts, d.h. des Schrotts, durch Wärmeaustausch mit den im Einschmelzprozess entstehenden heißen Gasen, gewährleisten. Hierzu ist der Deckel 5 des Elektrolichtbogenofens als Schrottsammelraum ausgebildet (vgl. Fig. 1). Die Draufsicht nach Fig. 17 verdeutlicht, dass das Ofengefäß aus dem in etwa vom Querschnitt kreisförmigen Unterofen und einem vom Querschnitt kreisförmigen Oberofen 4 und einem vom Querschnitt in etwa kreisförmigen unteren, ersten, Deckelteil 5a, besteht, das in ein oberes, zweites Deckelteil 5b, das eine rechtekkige Querschnittsform aufweist, übergeht. Dieser zweite Deckelteil 5b ist in zwei Schrottsammelräume 20, 21 durch Trennwände 112, die sich in Richtung Oberofen erstrecken sowie das Schutzrohr 19 für die Elektroden 15-17 getrennt. Der obere Deckelteil 5b wird durch zwei rechteckige Gas-Verschlussplatten 13, 14, die horizontal hin- und herbewegbar sind, geschlossen und geöffnet. In Fig. 17 befindet sich das linke Gas-Verschlusselement 13 in einer verschobenen offenen Stellung, wobei der Schrottkorb 112a die Chargierung mit Schrott verdeutlicht, während sich das rechte Gas-Verschlusselement 14 in seiner Schließstellung befindet. Mittels Fig. 18 als Draufsicht wird die Stützstruktur für den Deckel sowie die Dekkelhalterung verdeutlicht. Jeweils im unteren und oberen Teilbild ist das Ofengefäß von einer Stützstruktur 60a,b für den Deckel 5 umgeben, wobei die untere Stützstruktur 60a gleichzeitig auch als Elektrodentragvorrichtung 18 dient (vgl. auch den Vertikalschnitt der Fig. 5). Der Deckel liegt mit Tragpratzen 113-116 auf der Stützstruktur 60a,b auf. Die horizontal verschiebbaren Gas- Verschlusselemente 13, 14 werden in Führungen 117, 118 bzw. auf Laufbahnen bewegt, die auf Tragstrukturen 119-122 angeordnet sind.

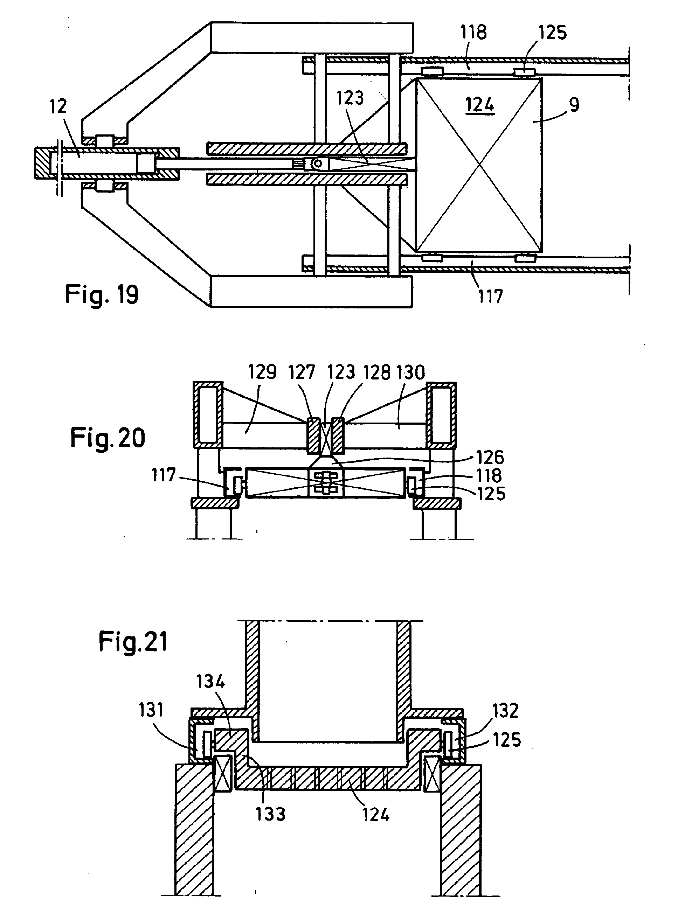

Bevorzugte Ausführungsformen für den Antrieb der Bewegung der Gas-Verschlusselemente 13, 14 zum dichten Abschließen der Schrottsammelräume 20, 21 des Deckels 5 sowie zum Öffnen zum Chargieren mit Schrott zeigen die Fig. 19 bis 21. Die Fig. 19 und 20 zeigen die Ausführungsform mit einer Flosse 123 zur Schmalführung, die ein Verkanten bei der Vertikalbewegung des Verschlusselementes verhindern soll. Hierzu weist das eigentliche Verschlusselement 13 in Form einer rechteckigen Platte 124, die mittels Rollen 125 auf einer Laufbahn geführt ist, an seiner von dem Ofen wegweisenden Seite ein mit einer Kolben-Zylinder-Einheit 12 verbundenes Mittelstück 126 auf, das mit einer sich nach oben erstreckenden schmalen Platte als Flosse 123 versehen ist. Diese Flosse 123 läuft entlang von Führungsschienen 127, 128, die über Tragarme 129, 130 gehalten werden und unterstützt auf diese Art und Weise einen Geradlauf des Verschlusselementes 13. Bei einer mittels Fig. 21 gezeigten Alternative laufen die Rollen 125 der Verschlusselemente 13, 14 in verdeckten Führungsbahnen 131, 132, die verhindern, dass Schrottstücke in der Führung liegen bleiben und dort eine Verklemmung bewirken. Hierzu ist die Platte 124 des Verschlusselemente mit einem hochgezogenen Seitenrand 133 mit horizontal verlaufenden Seitenflanschen 134 versehen, an denen die Rollen angeordnet sind. Die Seitenflansche 134 ragen in die kanalartig ausgebildete Führung 131, 132 hinein.

Mit Hilfe der Fig. 1 wird kurz das im Elektrolichtbogenofen ablaufende Chargierund Einschmelzverfahren erläutert. Bei zurückgefahrenen Gas-Verschlusselementen 13, 14 wird Schrott in den ersten und zweiten Schrottsammelraum 20, 21 chargiert, der anschließend bei geschlossenen Gas-Verschlusselementen 13, 14 und geöffneten Schrott-Verschlusselementen 9, 10 in den Unterofen 3 fällt. Mit beginnendem Schmelzvorgang beginnt auch die Schrottvorwärmung von im Schrottsammelraum 20, 21 oberhalb der Schrottverschlusselemente 9, 10 zurückgehaltenem, neu chargiertem, Schrott. Nachdem der Einschmelzvorgang beendet ist und der Abstich der Schmelze erfolgt ist, wird der bereits vorgewärmte Schrott eingeschmolzen und neuer kalter Schrott in den Schrottsammelräumen 20, 21, die auch abwechselnd gefüllt werden können, im Deckel 5 vorgewärmt.

## Patentansprüche

1. Vorrichtung zum Einschmelzen von Metall
mit einem Elektroschmelzofen, insbesondere einem Elektrolichtbogenofen (1), der ein Ofengefäß mit einem Deckel (5) umfasst, sowie mit Verfahrmitteln (39) für das Ofengefäß,
**dadurch gekennzeichnet,**
**dass** das Ofengefäß in Modulbauweise einen, mit einer Feuerfest-Auskleidung (2) versehenen, Unterofen (3) als ein erstes Modul sowie einen davon trennbaren Oberofen (4) als ein zweites Modul umfasst, und dass das Modul Unterofen (4) aus einer Einschmelz-Arbeitsstellung (I), in der es mit dem Oberofen (4) und dem Deckel (5) zu einem Gesamtmodulaufbau verbunden ist, horizontal in eine Stellung (II) zur Reparatur, insbesondere des Feuerfest-Materials, die nicht mehr dem Bereich des Oberofens (4) zugeordnet ist, mittels der Verfahrmittel (39) verfahrbar ist.

2. Vorrichtung nach Anspruch 1,
**dadurch gekennzeichnet,**
**dass** der Deckel (5) als ein von dem Oberofen (4) trennbarer Deckel als ein drittes Modul ausgebildet ist,
**dass** zwischen dem Oberofen (4) und dem Deckel (5) ein Spalt (59) vorliegt, der in der Arbeitsstellung (I) des Ofens mittels eines Dichtelementes (72, 73, 102) abgedichtet ist,
**dass** zur Vorbereitung der Herausbewegung des Unterofens (3) aus dem Gesamtmodulaufbau das Dichtelement (72, 73, 102) entfernbar ist unter Spaltbildung zwischen dem Oberofen (4) und dem Deckel (5) und
**dass** Mittel (63) zur vertikalen Bewegung des Oberofens (4) in Richtung Deckel unter Überwindung des Spaltes (59) vorliegen.

3. Vorrichtung nach Anspruch 2,
**dadurch gekennzeichnet,**
**dass** das Dichtelement mehrere, insbesondere drei, radial bewegbare Dichtsegment-Ringteile (82, 83, 84) umfasst.

4. Vorrichtung nach einem der Ansprüche 1 bis 3,
**dadurch gekennzeichnet,**
**dass** die Verfahrmittel (39) mindestens einen Wagen (27-29) umfassen, auf dem oder in den ein Unterofen (3) angeordnet oder eingesetzt ist, und dass der jeweilige Wagen (27-29) mittels Rollen (30) horizontal entlang der Arbeitsstellung (I), der Reparaturstellung (II) und ggf. einer Aufheizstellung (III) bewegbar ist.

5. Vorrichtung nach einem der Ansprüche 1 bis 4,
**dadurch gekennzeichnet,**
**dass** mindestens zwei Wagen (27, 29) nebeneinander und untereinander verbunden in einer Kette angeordnet sind,
**dass** jeweils ein Wagen (27, 29) einen Unterofen (3) aufnimmt, wobei ein Wagen (27) mit dem vom ihm aufgenommenen Unterofen (3I) in Arbeitsstellung (I) ist, während der nebengeordnete Wagen (29) mit dem von ihm aufgenommenen Unterofen (3II, 3III) sich in der benachbarten Reparatur (II) oder Aufheizstellung (III) befindet.

6. Vorrichtung nach einem der Ansprüche 1 bis 5,
**dadurch gekennzeichnet,**
**dass** der Wagen (27-29) den Unterofen (3) in einem Abstand (A) vom Boden beabstandet hält und dass Mittel zum Verfahren mindestens eines Pfannenwagens (35) mit einer Pfanne (38) an oder unter den Unterofen vorhanden sind.

7. Vorrichtung nach einem der Ansprüche 1 bis 6,
**dadurch gekennzeichnet,**
**dass** der Wagen (227) Stelzen (243, 244) und einen Querbalken (247) umfasst, dass der Unterofen (203) an einer Seite an dem oberen Teil einer Stelze (243) oberhalb des Querbalkens (247) befestigt ist, dass der Unterofen (203) an der anderen Seite mittels eines Kippantriebs, insbesondere mittels eines Kniehebelmechanismusses (212), aus einer horizontalen Lage in Arbeitsstellung (I) in eine schräge Lage zum Abstich kippbar ist, wobei Schmelze und anschließend die Schlacke durch ein in den Unterofen eingebrachtes Abstichloch (216) in eine unterhalb des Querbalkens angeordnete verfahrbare Pfanne (238) bzw. einen Schlackenauffangbehälter abgestochen wird.

8. Vorrichtung nach einem der Ansprüche 1 bis 7,
**dadurch gekennzeichnet,**
**dass** der Boden (216) des Unterofens (203) oder der Querbalken (247) mit einem Pufferelement (217) versehen ist, das den Boden (216) gegenüber dem Querbalken (247) während der gekippten Abstichposition und Positionierung des Bodens auf dem Querbalken abpuffert.

9. Vorrichtung nach einem der Ansprüche 1 bis 8,
**dadurch gekennzeichnet,**
**dass** der Ofen Verschlusselemente (9, 10) aufweist, die zwischen einer geschlossenen Stellung als Auffangbarriere für das einzuschmelzende Chargiergut, insbesondere Schrott, sowie einer geöffneten Stellung linear durch Öffnungen im Deckel (5) aus dem Ofengefäß heraus und in das Ofengefäß hinein verfahrbar sind, und
**dass** der Deckel nach oben hin durch Gas-Verschlusselemente (13, 14) verschließbar ist.

10. Vorrichtung nach einem der Ansprüche 1 bis 9,
**dadurch gekennzeichnet,**
**dass** der Deckel (5) und/oder die Gas-Verschlusselemente (13, 14) eine Keramikbeschichtung (108) und/oder eine Wasserkühlung aufweisen.

11. Vorrichtung nach einem der Ansprüche 1 bis 10,
**dadurch gekennzeichnet,**
**dass** die Keramikbeschichtung (108) einzelne Keramikplatten (109) umfasst, die jeweils an der heißen Innenseite (110) des Deckels (5) oder der Verschlusselemente (13, 14) mittels Halteelementen (111), die aus SiC-Keramik, insbesondere faserverstärkten SiC-Keramik, bestehen, befestigt sind.

12. Vorrichtung nach einem der Ansprüche 1 bis 11,
**dadurch gekennzeichnet,**
**dass** der Oberofen (4) und/oder der Deckel (5) aus einer hochwarmfesten Stahllegierung, insbesondere mit einem hohen Chrom- und einem hohen Tantalgehalt, bestehen.

13. Vorrichtung nach einem der Ansprüche 1 bis 13,
**dadurch gekennzeichnet,**
**dass** Gas-Brenner (25, 26), insbesondere Sauerstoff-Gas-Brenner, am Oberofen (4) unterhalb des Deckels (5) angeordnet sind.

14. Vorrichtung nach einem der Ansprüche 1 bis 13,
**dadurch gekennzeichnet,**
**dass** der Deckel (5) sich von unten nach oben hinsichtlich seiner Querschnittsfläche verbreitert, dass die Schrottverschlusselemente (9, 10) in seinem unteren Bereich schräg verfahrbar angeordnet sind, und
**dass** der Deckel (5) in seinem oberen Bereich eine Durchlassöffnung für Elektroden (15-17) aufweist, die mittels eines sie umgebenden Metallrohrs (19) geschützt sind.

15. Vorrichtung nach einem der Ansprüche 1 bis 14,
mit einem Ofengefäß mit einem in etwa vom Querschnitt kreisförmigen Unterofen (3) und einem vom Querschnitt kreisförmigen Oberofen (4) und einem vom Querschnitt in etwa kreisförmigen unteren, ersten, Deckelteil (5a), das in ein oberen, zweites Deckelteil (5b), das eine rechteckige Querschnittsform aufweist, übergeht und das einen ersten und zweiten Schrottsammelraum (20, 21) bildet, die nach unten durch die Schrottverschlusselemente (9, 10) begrenzt sind und die nach oben durch lineare, insbesondere horizontal, verschiebbare Gas-Verschlusselemente (13, 14) verschließbar und die durch das Elektrodenrohr (19) getrennt sind, und
mit einer Abgasleitung (24) am ersten sowie am zweiten Schrottsammelraum (20, 21) zur Abführung von Abgasen aus dem Ofengefäß, das durch Wärmetausch den Schrott oberhalb der Schrottverschlusselemente (9, 10) vorgewärmt hat.

16. Verfahren zum Betreiben einer Vorrichtung zum Einschmelzen von Metall mit einem Elektroschmelzofen, insbesondere einem Elektrolichtbogenofen (1), der ein Ofengefäß mit einem Deckel (5) umfasst, sowie mit Verfahrmitteln (39) für das Ofengefäß, nach einem der Ansprüche 1 bis 15,
**dadurch gekennzeichnet,**
**dass** das Ofengefäß für eine Einschmelz-Arbeitsstellung (I) nach einer Modulbauweise aus einem mit einer Feuerfest-Auskleidung (2) versehenen Unterofen (3) als einem ersten Modul und einem davon trennbaren Oberofen (4) als einem zweites Modul zusammengesetzt ist,
und **dass** der mit der Feuerfest-Auskleidung (2) versehene Unterofen (3) unter Auflösung des Gesamtmodulaufbaus in eine Reparaturstellung (II) verfahren wird, die nicht mehr dem Bereich des Oberofens (4) zugeordnet ist.

17. Verfahren nach Anspruch 16,
**dadurch gekennzeichnet,**
**dass** zum Auflösen des Gesamtmodulaufbaus ein Dichtelement (72, 73, 102) in einem Spalt (59) zwischen dem Oberofen (4) und einem hiervon trennbaren Deckel (5) als dritten Modul entfernt wird und
**dass** der Oberofen (4) in Richtung Deckel (5) unter Verkleinerung oder Überwindung des Spaltes (59) vertikal bewegt wird,
**dass** der Unterofen (3) ungehindert horizontal aus dem Bereich des Oberofens (4) verfahren wird und
**dass** zur Neubildung des Gesamtmodulaufbaus nach Einfahren des Unterofens (311) der Oberofen (4) abgesenkt und der sich bildende Spalt (59) zwischen Oberofen (4) und Deckel (5) wieder abgedichtet wird.

18. Verfahren nach Anspruch 16 oder 17,
**dadurch gekennzeichnet,**
**dass** zum Ersatz des Unterofens (3) als erstem Modul ein anderer Unterofen (311) als viertes Modul in die Arbeitsstellung zum Aufbau eines neuen Gesamtmodulaufbaus verfahren wird, wobei sich das erste und vierte Modul wechselweise entweder in der Reparatur (II)- oder in der Arbeitsstellung (I) befinden.

19. Verfahren nach einem der Ansprüche 16 bis 18,
**dadurch gekennzeichnet,**
**dass** der jeweilige Unterofen (3) zeitlich vor der Arbeitsstellung (I) nach der Reparaturstellung (II) einem Aufheizschritt (III) unterworfen wird.
